# EUROPÄISCHE PATENTANMELDUNG

(11) **EP 2 233 750 A2**
(43) Veröffentlichungstag der Anmeldung: **29.09.2010**
(21) Anmeldenummer: 10156837.6
(22) Anmeldetag: 18.03.2010
(51) Int. Cl.: F15B 7/00, F15B 21/04

(54) **Hydraulische Betätigungseinrichtung mit einer Entlüftungsanordnung und Fluidkupplung mit einer Entlüftungsfunktion**

(30) Priorität: 23.03.2009 DE 102009001737
(71) Anmelder: ZF Friedrichshafen AG, 88038 Friedrichshafen (DE)
(72) Erfinder: Gebauer, Dieter, 97502 Obbach (DE); Tulaczko, Boleslaw, 97453 Schonungen (DE)

(57) **Zusammenfassung**

Es wird eine hydraulische Betätigungseinrichtung, insbesondere zur Betätigung einer Kraftfahrzeugbremse oder -kupplung mit einer Entlüftungsanordnung beschrieben. Zur Kostenreduzierung wird vorgeschlagen, die Entlüftungsanordnung innerhalb einer in der hydraulischen Betätigungseinrichtung vorgesehenen Fluidkupplung (24) auszubilden. Es wird weiter eine steckbare Fluidkupplung beschrieben, die eine Muffe (46) mit einem Aufnahmeraum und einen darin angeordneten Stecker (40) umfasst, durch welche ein gemeinsamer Fluidkanal verläuft, der mittels einer zwischen dem Stecker und der Muffe (46) wirkendem Dichtelement (56) abgedichtet ist. Zur Ausbildung einer Entlüftungsanordnung ist vorgesehen, dass die Muffe einen in deren Aufnahmeraum mündenden Entlüftungskanal (60) aufweist und dass die Fluidkupplung (24) eine Verstelleinrichtung zur axialen Verlagerung des Steckers (40) innerhalb der Muffe (46) umfasst, wobei in einer ersten Axiallage des Steckers (40) eine Strömungsverbindung zwischen dem Fluidkanal und dem Entlüftungskanal (60) durch die Dichtung (56) verschlossen ist und dass der Stecker (40) durch die Verstelleinrichtung in eine zweite Axiallage verlagerbar ist, in der die Fluidverbindung zwischen dem Fluidkanal und dem Entlüftungskanal offen ist.

## Beschreibung

### Beschreibung

Die Erfindung betrifft eine hydraulische Betätigungseinrichtung, insbesondere zur Betätigung einer Kraftfahrzeugbremse oder -kupplung, gemäß dem Oberbegriff des Patentanspruchs 1 und eine Fluidkupplung für eine solche hydraulische Betätigungseinrichtung gemäß dem Oberbegriff des Patentanspruchs 2.

Es ist bei gattungsgemäßen hydraulischen Betätigungseinrichtungen, insbesondere zur Betätigung einer Fahrzeugkupplung oder -bremse, allgemein bekannt, eine Entlüftungsanordnung vorzusehen, durch welche in dem hydraulischen System eingeschlossene Gasvolumina austreten können. Die Entlüftungsanordnung kann gleichfalls zur Befüllung des hydraulischen Systems mit Fluid benutzt werden. Gemäß einer in der DE 195 16 389 A1 beschriebenen Variante ist die Entlüftungsanordnung unmittelbar an einem Gehäuse eines Druckmittelzylinders angeordnet, wozu dieses zusätzlich zu einem Druckanschluss mit einem weiteren seitlich abstehenden Flansch zur Aufnahme eines darin eingeschraubten Entlüftungsventils ausgebildet ist. Diese Lösung ist durch den damit verbundenen hohen werkzeugtechnischen Aufwand und durch relativ lange Fertigungszykluszeiten insgesamt sehr kostenintensiv.

Der Erfindung liegt davon ausgehend die Aufgabe zugrunde, eine kostengünstige Entlüftungsanordnung für eine solche hydraulische Betätigungseinrichtung bereitzustellen. Eine weitere Aufgabe ist darin zu sehen, eine Fluidkupplung mit einem erweiterten Funktionsumfang darzustellen.

Die vorstehenden Aufgaben werden bei einer hydraulischen Betätigungseinrichtung der eingangs genannten Art gemäß einem ersten Aspekt durch das im Kennzeichen von Anspruch 1 genannte Merkmal gelöst. Es wird demnach eine hydraulische Betätigungseinrichtung, insbesondere zur Betätigung einer Kraftfahrzeugbremse oder - kupplung, vorgeschlagen, die zwei mittels deren Druckanschlüssen über einen Fluidkanal verbundene Druckmittelzylinder umfasst, von denen einer als Nehmerzylinder und der andere als Geberzylinder fungiert. Dabei wird ein gemeinsamer Fluid-Druckraum ausgebildet, wobei der Fluidkanal eine Fluidleitung und mindestens eine zwischen zwei Elementen der hydraulischen Betätigungseinrichtung ausgebildete Fluidkupplung aufweist. Gemäß der Erfindung ist die hydraulische Betätigungseinrichtung **dadurch gekennzeichnet, dass** eine Entlüftungsanordnung zur Entlüftung des Fluid-Druckraums innerhalb der Fluidkupplung ausgebildet ist.

Der vorgeschlagenen Lösung liegt der Gedanke zugrunde, die notwendige Entlüftungsanordnung nicht wie bisher mit hohem Aufwand an einem für eine bestimmte Applikation speziell ausgestalteten hydraulischen Funktionselement auszuführen, sondern diese stattdessen an einem hydraulischen Funktionselement zu verwirklichen, welches möglichst unabhängig von der speziellen Applikation und deshalb unverändert bei jeder hydraulischen Betätigungseinrichtung Verwendung findet. Diese Anforderung wird durch eine lösbare Fluidkupplung, insbesondere durch deren Stecker und Muffe erfüllt, die in identischer Weise an einer Vielzahl sich durch weitere Komponenten unterscheidenden hydraulischen Betätigungseinrichtungen ausgebildet ist. Dabei kann die Fluidkupplung selbst an unterschiedlichen hydraulischen Funktionskomponenten bereitgestellt werden, z.B. an einem mit einer Fluidleitung verbundenen Druckmittelzylinder oder an einem mit einer Fluidleitung in Verbindung stehendem hydraulischen Dämpfungselement oder einen Strömungsbegrenzungsglied, einem sog. Peak Torque Limiter.

Gemäß einem zweiten Aspekt wird die eingangs gestellte Aufgabe durch eine Fluidkupplung für eine hydraulische Betätigungseinrichtung gelöst, welche eine Muffe mit einem Aufnahmeraum und einen ersten Fluidkanalabschnitt aufweist und weiter einen in dem Aufnahmeraum angeordneten Stecker mit einem darin ausgebildeten zweiten Fluidkanalabschnitt, welcher mit dem ersten Fluidkanalabschnitt einen Teil eines gemeinsamen Fluidkanals bildet und wobei die Fluidkupplung ein zwischen dem Stecker und der Muffe wirkendes Dichtelement zur Abdichtung des Fluidkanals umfasst.

Erfindungsgemäß ist zur Ausbildung einer Entlüftungsanordnung an der Muffe ein in deren Aufnahmeraum mündender Entlüftungskanal ausgebildet. Des Weiteren umfasst die Fluidkupplung eine Verstelleinrichtung zur axialen Verlagerung des Steckers innerhalb der Muffe, wobei in einer ersten Axiallage des Steckers eine Strömungsverbindung zwischen dem Fluidkanal und dem Entlüftungskanal durch die Dichtung verschlossen ist und wobei der Stecker durch die Verstelleinrichtung in eine zweite Axiallage verlagerbar ist, in der die Strömungsverbindung zwischen dem Fluidkanal und dem Entlüftungskanal offen bzw. geöffnet ist. Durch die Ausnutzung des ohnehin bei einer steckbaren Fluidkupplung vorgesehenen Steckers und der Muffe zum Zwecke der Belüftung einer hydraulischen Betätigungseinrichtung kann beispielsweise bei einem Druckmittelzylinder auf einen separaten Anschlussflansch mit einer darin eingeschraubten Belüftungsschraube verzichtet werden. Zudem lässt sich die Entlüftungsanordnung relativ einfach und kostengünstig in bekannte Fluid-Kupplungen integrieren. Zum Schutz gegen in die hydraulische Betätigseinrichtung eindringende Verunreinigen empfiehlt es sich, den Entlüftungskanal durch einen bei einem Entlüftungsvorgang abnehmbaren Verschluss zu sichern. Zur Aufnahme des Verschlusses kann an der Muffe ein entsprechender Flansch vorgesehen sein, was jedoch nicht zwingend ist.

Die vorgeschlagene Ausgestaltung der Fluidkupplung kann auf unterschiedliche Art und Weise realisiert werden. Beispielweise kann die Dichtung besonders bevorzugt an dem Stecker angeordnet sein. Die mit dem Stecker mitfahrende Dichtung kann entsprechend einer "Zu-Stellung" entweder unmittelbar im Mündungsbereich des Entlüftungskanals gelegen oder von dieser Position ausgehend in Richtung des muffenseitigen Fluidkanalabschnitts gelegen sein. Hierbei ist keine Strömungsverbindung zwischen dem Entlüftungskanal und dem Fluidkanal ausgebildet. Zur Erzielung der "Offen-Stellung" wird der Stecker durch die Verstelleinrichtung verlagert, wobei die Dichtung auf die der Mündung des Entlüftungskanals gegenüberliegende Axialseite verlagert wird. In diesem Fall ist eine Strömungsverbindung zwischen dem Entlüftungskanal und dem Fluidkanal hergestellt.

Alternativ kann die Dichtung der Fluid-Kupplung auch fest an der Muffe, insbesondere an der zum muffenseitigen Fluidkanalabschnitt angeordneten Axialseite des Entlüftungskanals angeordnet sein. Der Öffnungszustand des Entlüftungskanals lässt sich hierbei je nach der Axiallage der Stecker-Öffnung zu der feststehenden Dichtung einstellen. Bei dieser Variante ist es vorteilhaft, eine weitere Dichtung an der zum Stecker weisenden Axialseite des Entlüftungskanals vorzusehen, damit bei einer Entlüftung austretendes Fluid nicht aus der Stecker-Einführöffnung der Muffe sondern ausschließlich aus dem Entlüftungskanal austritt. Es ist hierbei auch weiter vorteilhaft, in einem Wandbereich des Steckers eine in dessen Kanalabschnitt mündende Öffnung auszubilden, welche die Strömungsverbindung zwischen dem Fluidkanal und dem Entlüftungskanal herstellt.

Der Stecker selbst kann zunächst als separates Teil vorliegen und beispielsweise durch Kleben oder Schweißen mit einer Fluidleitung verbunden werden. Es ist jedoch vorteilhaft, den Stecker integral an einem hydraulischen Funktionselement auszubilden, indem dieser z.B. durch den Endabschnitt einer Kunststoff-Fluidleitung selbst geformt ist. Hierbei ist es auch möglich bei der Formgebung des Steckers gleichzeitig das Außengewinde zu fertigen, was bei der Herstellung nach einem Extrudier- oder Korrugatorverfahren möglich ist.

Gemäß einer besonders vorteilhaften Ausführungsform ist die Verstelleinrichtung als Gewindetrieb ausgeführt, wobei der Stecker ein Außengewinde umfasst, dass mit einem in einer Armatur ausgeführten Innengewinde zusammenwirkt und wobei die Armatur drehbar und axialgesichert an der Muffe festgelegt ist. Der Drehwinkelbereich der zur Handhabung mit einem gerändelten Kragen ausgeführten Armatur ergibt sich dabei in Abhängigkeit von der Steigung des vorgesehenen Gewindes und von der gewünschten axialen Verlagerungsstrecke des Steckers. Die Axialsicherung der Armatur kann z.B. mittels eines Sicherungsbügels erreicht werden, der die Muffe segmentweise durchgreift und gleichzeitig in eine am Außenumfang der Armatur ausgeführte Ringnut eingreift, wie dieses bei Steckverbindungen zwischen Stecker und Muffe bereits bekannt ist. Der Stellweg des Steckers ist durch zumindest einen Axialanschlag gegen das vollständige Herausschrauben des Steckers begrenzt, wobei auch in der Gegenrichtung ein Axialanschlag vorgesehen sein kann. Die Anschläge sind vorteilhafterweise integral an dem Stecker ausgebildet.

Mit weiterem Vorteil ist die Armatur als Kunststoffteil gefertigt, wobei diese mit einem Axialschlitz versehen ist und zum Aufschieben auf den Gewindeabschnitt des Steckers radial aufgeweitet werden kann. Es ist auch möglich, die Armatur einteilig, klappbar oder zweiteilig zu gestalten.

Nachfolgend wird die Erfindung anhand der beigefügten Figuren beispielhaft erläutert. Es zeigen:
- Fig. 1: eine schematische Darstellung einer hydraulischen Betätigungseinrichtung für eine Kraftfahrzeugkupplung;
- Fig. 2a,b: eine innerhalb einer Fluidkupplung ausgebildete Entlüftungsanordnung in einer geschlossenen Stellung;
- Fig. 3a,b: die in den Fig. 2a, b gezeigte Fluidkupplung in einer offenen Stellung der Entlüftungsanordnung.

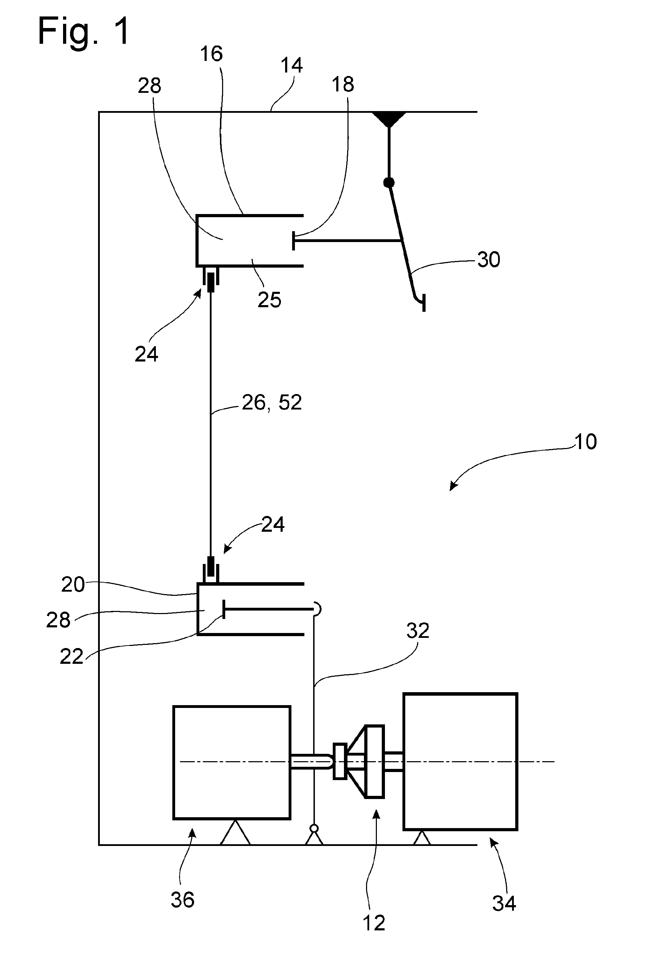

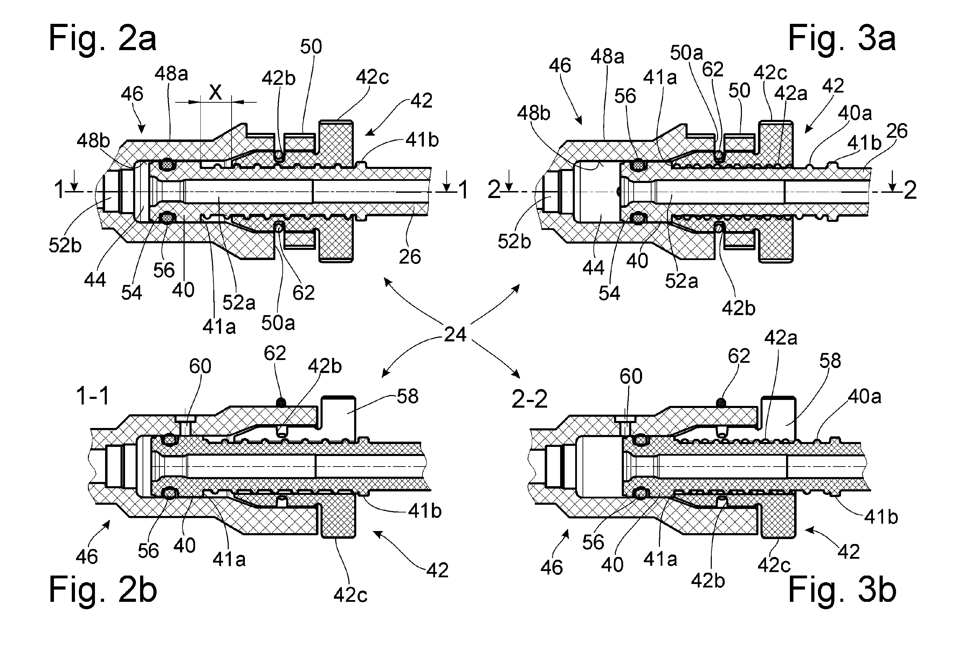

Fig. 1 zeigt schematisch eine hydraulische Betätigungseinrichtung 10 zum Betätigen einer Kraftfahrzeugkupplung 12, welche an einem Chassis 14 eines Kraftfahrzeugs angeordnet und eingangsseitig mit der Abtriebswelle des Verbrennungsmotors 34 und ausgangsseitig mit einem Schaltgetriebe 36 verbunden ist. Die Betätigungseinrichtung 10 umfasst einen Geberzylinder 16 mit einem Kolben 18 und einen Nehmerzylinder 20 mit einem Kolben 22, welche miteinander mittels steckbarer Fluidkupplungen 24 über eine fluidbefüllte Kunststofffiuidieitung 26 verbunden sind und einen gemeinsamen Druckraum 28 ausbilden. Zur Bildung der Fluidkupplungen 24 weisen die Druckmittelzylinder 16, 20 jeweils einen Gehäuseflansch auf, der je einen an den Enden der Fluidleitung 26 angeordneten Stecker aufnimmt. Zur Entlüftung der Betätigungseinrichtung 10 ist innerhalb einer der Fluidkupplungen 24 eine Entlüftungsanordnung ausgebildet, wie diese anhand der Fig. 2, 3 noch ausführlich beschrieben wird. Der Kolben 18 des Geberzylinders 16 kann durch ein Kupplungspedal 30 betätigt werden, woraufhin sich der Kolben 22 des Nehmerzylinders 20 verschiebt und eine Kupplungsgabel 32 zum Ausrücken der Kupplung 12 an einem als Verbrennungsmotor 34 ausgebildeten Antriebsaggregat steuert.

Die Fig. 2 a,b; 3 a,b zeigen eine Fluidkupplung 24 mit einem Stecker 40, der mittels einer auf diesem angeordneten Armatur 42 in eine zentrale Ausnehmung 44 einer Kunststoff-Muffe 46 eingeführt und dort axial gesichert ist. Die Ausnehmung 44 ist mit einem gestuften Innendurchmesser ausgebildet, wobei der Abschnitt mit dem kleineren Innendurchmesser einen Dichtungsbereich 48a mit einer Dichtfläche 48b und der Abschnitt mit dem größeren Innendurchmesser zur axialen Sicherung von Stecker 40 und Muffe 46 einen Befestigungsbereich 50 darstellt. Zentral innerhalb des Steckers 40 und der Muffe 46 sind zueinander fluchtende Fluidkanalabschnitte 52a, b eingebracht, die einen Teil des gemeinsamen, den Geber- mit dem Nehmerzylinder 16, 20 verbindenden Fluidkanals 52 bilden.

In den Figuren ist erkennbar, dass der Stecker 40 durch einen Endabschnitt der aus einem thermoplastischen Polymer, z.B. PA 12 hergestellten Fluidleitung 26, gebildet ist. An dem axial über die Armatur 42 vorstehenden Abschnitt der Fluidleitung 26, dessen Außendurchmesser geringfügig kleiner ist als der Innendurchmesser der Dichtfläche 48b, ist integral mit der Fluidleitung 26 eine Dichtnut 54 zur Aufnahme eines Dichtrings 56 vorgesehen, durch welche der Fluidkanal 52 gegenüber der Umgebung abgedichtet wird.

Die auf dem Stecker 40 angeordnete Armatur 42 ist als einteiliges hülsenförmiges Kunststoffelement, insbesondere aus Polyamid, gefertigt und weist insbesondere im Befestigungsbereich der Muffe 46 eine zu deren komplementäre äußere Gestalt auf. Zur Montage auf dem Stecker 40 ist die Armatur 42 mit einem durchgehenden Längsschlitz 58 ausgebildet (Fig. 2b; 3b) und kann dadurch radial etwas aufgeweitet und somit von dem dargestellten Ende der Fluidleitung 26 aus aufgeschoben werden, wo diese dort am Stecker 40 einschnappen kann.

Zur Bildung einer Entlüftungsanordnung weist zum einen die Muffe 46 einen in deren Aufnahmeraum 44 mündenden Entlüftungskanal 60 auf und zum zweiten umfasst die Fluidkupplung 24 eine Verstelleinrichtung zur axialen Verlagerung des Steckers 40 innerhalb der Muffe 46. Die Verstelleinrichtung ist als Gewindetrieb ausgeführt, wobei der Stecker 40 ein Außengewinde 40a trägt, das mit einem in der Armatur 42 ausgeführten Innengewinde 42a zusammenwirkt. Beide Gewinde 40a, 42a werden bereits während der Formgebung von Armatur 42 und Stecker 40 erzeugt, so dass eine diesbezügliche nachträgliche Bearbeitung der Teile entfallen kann. Die Armatur 42 weist weiter an einem zylindrischen Abschnitt der Außenumfangsfläche eine umlaufende Ringnut 42b auf, welche im zusammengesteckten Zustand mit einem an dem Befestigungsbereich 50 der Muffe 46 ausgeführten Radialschlitz 50a übereinstimmt, so dass durch diesen in einer bekannter Weise ein Sicherungselement in Form eines Federdrahtbügels 62 eingeführt werden kann, wodurch die Armatur 42 drehbar und axialgesichert an der Muffe 46 festgelegt ist. Zur Betätigung der Entlüftungsanordnung ist an der Armatur 42 ein gerändelter Bund 42c vorgesehen, über den eine Drehbewegung auf die Armatur 42 einleitbar ist und in deren Folge sich der Stecker 40 innerhalb der Muffe 46 axial verlagern kann. Der axiale Verstellbereich des Steckers 40 wird dabei durch an diesem ausgeführte axiale Anschlagkonturen 41 a,b begrenzt.

In der in Fig. 2a,b dargestellten Lage des Steckers 40 ist der Entlüftungskanal 60 mittels der Dichtung 56 gegenüber dem Fluidkanal 52 abgesperrt, so dass weder Fluid noch eingeschlossene Gase aus dem hydraulischen System 10 austreten können. Wird bei einem Entlüftungsvorgang bei feststehender Muffe 46 die Armatur 42 verdreht, so kann sich der Stecker 40 durch den Gewindetrieb innerhalb der Muffe 46 um eine Distanz X verlagern, wobei die Dichtung 56 die Mündung des Entlüftungskanals 60 überfährt und wodurch eine Strömungsverbindung zwischen dem Entlüftungskanal 60 und dem Fluidkanal 52 freigegeben wird. Dadurch können in dieser Stellung Gase aus der hydraulischen Betätigungseinrichtung 10 austreten.

Die Fluidleitung 26 kann zunächst in an sich bekannter Weise durch ein Extrusionsverfahren hergestellt werden, wobei die in den Fig. 2a,b; 3a,b gezeigte Außenkontur mit der Dichtnut 54 unmittelbar anschließend im noch verformbaren Zustand der Fluidleitung 26 durch ein Korrugatorverfahren mittels Abformung von Formbacken ausgebildet werden kann.

### Bezugszeichenliste

- 10: hydraulische Betätigungseinrichtung
- 12: Kraftfahrzeugkupplung
- 14: Chassis
- 16: Geberzylinder
- 18: Kolben
- 20: Nehmerzylinder
- 22: Kolben
- 24: Fluidkupplung
- 26: Fluidleitung
- 28: Druckraum
- 30: Kupplungspedal
- 32: Kupplungsgabel
- 34: Verbrennungsmotor
- 36: Schaltgetriebe
- 40: Stecker
- 40a: Außengewinde
- 41a,b: Axialanschlag
- 42: Armatur
- 42b: Ringnut
- 42a: Innengewinde
- 42c: Bund
- 44: Zentralausnehmung
- 46: Muffe
- 48a: Dichtungsbereich
- 48b: Dichtfläche
- 50: Befestigungsbereich
- 50a: Radialschlitz
- 52: Fluidkanal
- 52a,b: Fluidkanalabschnitt
- 54: Dichtnut
- 56: Dichtring
- 58: Längsschlitz
- 60: Entlüftungskanal
- 62: Sicherungselement

## Patentansprüche

1. Hydraulische Betätigungseinrichtung (10), insbesondere zur Betätigung einer Kraftfahrzeugbremse oder -kupplung, umfassend
- zwei, einen Druckanschluss aufweisende Druckmittelzylinder (16, 20), von denen einer als Nehmerzylinder (20) und der andere als Geberzylinder (16) fungiert,
- einen Fluidkanal (52), welcher die Druckmittelzylinder (16, 20) mittels deren Druckanschlüsse unter Ausbildung eines gemeinsamen Fluid-Druckraums (28) verbindet und wobei der Fluidkanal (52) eine Fluidleitung (26) und mindestens eine zwischen zwei Elementen der hydraulischen Betätigungseinrichtung ausgebildete Fluidkupplung (24) aufweist, und
- eine Entlüftungsanordnung zur Entlüftung des Fluid-Druckraums (28),
**dadurch gekennzeichnet,**
**dass** die Entlüftungsanordnung innerhalb der Fluidkupplung (24) ausgebildet ist.

2. Fluidkupplung (24) für eine hydraulische Betätigungseinrichtung (10), umfassend
- eine Muffe (46) mit einem Aufnahmeraum (44) und mit einem ersten Fluidkanalabschnitt (52b),
- einen in dem Aufnahmeraum (44) angeordneten Stecker (40) mit einem darin ausgebildeten zweiten Fluidkanalabschnitt (52a), der mit dem ersten Fluidkanalabschnitt (52b) einen Teil eines gemeinsamen Fluidkanals (52) bildet und
- ein zwischen dem Stecker (40) und der Muffe (46) wirkendes Dichtelement (56) zur Abdichtung des Fluidkanals (52),
**dadurch gekennzeichnet,**
**dass** die Muffe (46) einen in deren Aufnahmeraum (44) mündenden Entlüftungskanal (60) aufweist und dass die Fluidkupplung (24) eine Verstelleinrichtung zur axialen Verlagerung des Steckers (40) innerhalb der Muffe (46) umfasst, wobei in einer ersten Axiallage des Steckers (40) eine Strömungsverbindung zwischen dem Fluidkanal (52) und dem Entlüftungskanal (60) durch das Dichtelement (56) verschlossen ist und dass der Stecker (40) durch die Verstelleinrichtung in eine zweite Axiallage verlagerbar ist, in der die Fluidverbindung zwischen dem Fluidkanal (52) und dem Entlüftungskanal (60) offen ist.

3. Fluidkupplung nach Anspruch 2,
**dadurch gekennzeichnet,**
**dass** das Dichtelement (56) an dem Stecker (40) angeordnet ist.

4. Fluidkupplung nach Anspruch 2,
**dadurch gekennzeichnet,**
**dass** das Dichtelement (46) an der Muffe (46) an der zum Fluidkanalabschnitt (52b) weisenden Axialseite des Entlüftungskanals (60)angeordnet ist.

5. Fluidkupplung nach Anspruch 4,
**dadurch gekennzeichnet,**
**dass** eine weitere Dichtung an der Muffe (46) an der vom Fluidkanalabschnitt (52b) abgewandten Axialseite des Entlüftungskanals (60)angeordnet ist.

6. Fluidkupplung nach einem der vorhergehenden Ansprüche,
**dadurch gekennzeichnet,**
**dass** in einem Wandbereich des Steckers (40) eine in dessen Fluidkanalabschnitt (52a) mündende Öffnung ausgeführt ist.

7. Fluidkupplung nach einem der vorhergehenden Ansprüche,
**dadurch gekennzeichnet,**
**dass** die Muffe (46) an einem Druckmittelzylinder (16, 20) ausgebildet ist.

8. Fluidkupplung nach einem der vorhergehenden Ansprüche,
**dadurch gekennzeichnet,**
**dass** die Verstelleinrichtung als Gewindetrieb ausgeführt ist, wobei der Stecker (40) ein Außengewinde (40a) umfasst, dass mit einem in einer Armatur (42) ausgeführten Innengewinde (42a) zusammenwirkt und wobei die Armatur (40) drehbar und axial gesichert an der Muffe (46) festgelegt.

9. Fluidkupplung nach einem der vorhergehenden Ansprüche,
**dadurch gekennzeichnet, dass** der axiale Verstellbereich des Steckers (40) durch einen Axialanschlag (41a, b) begrenzt ist.

10. Fluidkupplung nach einem der vorhergehenden Ansprüche,
**dadurch gekennzeichnet,**
**dass** der Stecker (40) durch den Endabschnitt einer Fluidleitung (26) gebildet wird.

11. Fluidkupplung nach einem der vorhergehenden Ansprüche,
**dadurch gekennzeichnet, dass** das Außengewinde (40a) integral an der Fluidleitung (26) ausgeführt ist.

12. Fluidkupplung nach einem der vorhergehenden Ansprüche,
**dadurch gekennzeichnet, dass** die Armatur (42) als Kunststoffteil ausgeführt ist
